# EUROPEAN PATENT APPLICATION

(11) **EP 4 203 477 A1**
(43) Date of publication of application: **28.06.2023**
(21) Application number: 21864146.2
(22) Date of filing: 20.08.2021
(51) Int. Cl.: H04N 19/597

(54) **IMAGE PROCESSING DEVICE AND METHOD**

(30) Priority: 03.09.2020 JP 2020148334
(71) Applicant: Sony Group Corporation, Minato-Ku, Tokyo, 108-0075 (JP)
(72) Inventor: YANO Koji, Tokyo 108-0075 (JP)
(74) Representative: D Young & Co LLP
(86) International application number: PCT/JP2021/030600
(87) International publication number: WO 2022/050088

(57) **Abstract**

The present disclosure relates to an image processing apparatus and method capable of reducing deterioration in quality of a point cloud.

An angle image having, as a pixel value, information indicating an angular component of geometry data of a point cloud expressing a three-dimensional shaped object as a set of points is generated, and the generated angle image is encoded. Furthermore, encoded data is decoded to generate an angle image having, as a pixel value, information indicating an angular component of geometry data of a point cloud expressing a three-dimensional shaped object as a set of points, and the point cloud is constructed by using the generated angle image. The present disclosure can be applied to, for example, an image processing apparatus, an electronic device, an image processing method, a program, or the like.

## Description

### TECHNICAL FIELD

The present disclosure relates to an image processing apparatus and method, and more particularly, to an image processing apparatus and method capable of reducing deterioration in quality of a point cloud.

### BACKGROUND ART

Conventionally, encoding/decoding of point cloud data expressing a three-dimensional shaped object as a set of points has been standardized by Moving Picture Experts Group (MPEG) (refer to Non-Patent Document 1, for example).

Furthermore, there has been proposed a method (hereinafter, also referred to as a video-based approach) in which geometry data and attribute data of a point cloud are projected onto a two-dimensional plane for each small region, an image (patch) projected onto the two-dimensional plane is disposed in a frame image, and the frame image is encoded by an encoding method for two-dimensional images (refer to Non-Patent Documents 2 to 4, for example).

Moreover, there has been conceived a method in which LiDAR (light detection and ranging, or laser imaging detection and ranging) data obtained by measuring scattered light with respect to light irradiation and analyzing a distance to a subject at a long distance and a property of the subject is encoded by an encoding method for two-dimensional images as in the video-based approach described above (refer to Non-Patent Document 5 and Patent Document 1, for example).

### CITATION LIST

### NON-PATENT DOCUMENTS

Non-Patent Document 1: "Information technology - MPEG-I (Coded Representation of Immersive Media) - Part 9: Geometry-based Point Cloud Compression", ISO/IEC 23090-9:2019(E)
Non-Patent Document 2: Tim Golla and Reinhard Klein, "Real-time Point Cloud Compression", IEEE, 2015
Non-Patent Document 3: K. Mammou, "Video-based and Hierarchical Approaches Point Cloud Compression", MPEG m41649, Oct. 2017
Non-Patent Document 4: K. Mammou, "PCC Test Model Category 2 v0", N17248 MPEG output document, October 2017
Non-Patent Document 5: Peter van Beek; Intel & Mobileye Silicon Valley Innovation Center; San Jose, California, USA, "Image-based Compression of Lidar Sensor Data", Society for Imaging Science and Technology, 2019, https://www.ingentaconnect.com/contentone/ist/ei/2019/000 02019/00000015/art00013?crawler=true&mimetype=application /pdf

### PATENT DOCUMENT

Patent Document 1: US 2019/0051017

### SUMMARY OF THE INVENTION

### PROBLEMS TO BE SOLVED BY THE INVENTION

However, in a case of a method described in Non-Patent Document 5 or Patent Document 1, when the LiDAR data is transformed into an image, the LiDAR data is aligned with pixel positions in a two-dimensional image, and thus there is a possibility that information amount of geometry data is reduced. Therefore, there is a possibility that quality of the point cloud data is reduced.

The present invention has been made in view of such circumstances, and an object thereof is to reduce deterioration in quality of a point cloud due to encoding/decoding.

### SOLUTIONS TO PROBLEMS

An image processing apparatus according to one aspect of the present technology includes an angle image generation unit that generates an angle image having, as a pixel value, information indicating an angular component of geometry data of a point cloud expressing a three-dimensional shaped object as a set of points, and an angle image encoding unit that encodes the angle image generated by the angle image generation unit.

An image processing method according to one aspect of the present technology includes generating an angle image having, as a pixel value, information indicating an angular component of geometry data of a point cloud expressing a three-dimensional shaped object as a set of points, and encoding the generated angle image.

An image processing apparatus according to another aspect of the present technology includes an angle image decoding unit that decodes encoded data to generate an angle image having, as a pixel value, information indicating an angular component of geometry data of a point cloud expressing a three-dimensional shaped object as a set of points, and a construction unit that constructs the point cloud by using the angle image generated by the angle image decoding unit.

An image processing method according to another aspect of the present technology includes decoding encoded data to generate an angle image having, as a pixel value, information indicating an angular component of geometry data of a point cloud expressing a three-dimensional shaped object as a set of point, and constructing the point cloud by using the generated angle image.

In an image processing apparatus and method according to one aspect of the present technology, an angle image having, as a pixel value, information indicating an angular component of geometry data of a point cloud expressing a three-dimensional shaped object as a set of points is generated, and the generated angle image is encoded.

In an image processing apparatus and method according to another aspect of the present technology, encoded data is decoded to generate an angle image having, as a pixel value, information indicating an angular component of geometry data of a point cloud expressing a three-dimensional shaped object as a set of points, and the point cloud is constructed by using the generated angle image.

### BRIEF DESCRIPTION OF DRAWINGS

Fig. 1 is a diagram describing LiDAR data.
Fig. 2 is a diagram describing application of two-dimensional image encoding to the LiDAR data.
Fig. 3 is a diagram describing a method for encoding the LiDAR data.
Fig. 4 is a diagram describing angle images.
Fig. 5 is a diagram describing angle images.
Fig. 6 is a diagram describing layering of a depth image.
Fig. 7 is a block diagram illustrating a main configuration example of an encoding apparatus.
Fig. 8 is a flowchart describing an example of a flow of encoding processing.
Fig. 9 is a block diagram illustrating a main configuration example of a decoding apparatus.
Fig. 10 is a flowchart describing an example of a flow of decoding processing.
Fig. 11 is a block diagram illustrating a main configuration example of a computer.

### MODES FOR CARRYING OUT THE INVENTION

Modes for carrying out the present disclosure (hereinafter, referred to as embodiments) will be described below. Note that the description will be made in the following order.
1. Two-dimensional image encoding of LiDAR data
2. First embodiment (encoding apparatus)
3. Second embodiment (decoding apparatus)
4. Supplementary note

### <1. Two-dimensional image encoding of LiDAR data>

### <Documents or the like supporting technical content/technical terms>

The scope disclosed in the present technology includes not only the content described in the embodiments but also the content described in the following non-patent documents and the like that are known at the time of filing, content of other documents referred to in the following non-patent documents, and the like.

Non-Patent Document 1: (described above)
Non-Patent Document 2: (described above)
Non-Patent Document 3: (described above)
Non-Patent Document 4: (described above)
Non-Patent Document 5: (described above)
Non-Patent Document 6: Kangying CAI, Vladyslav Zakharcchenko, Dejun ZHANG, "[VPCC] [New proposal] Patch skip mode syntax proposal", ISO/IEC JTC1/SC29/WG11 MPEG2019/ m47472, March 2019, Geneva, CH
Non-Patent Document 7: "Text of ISO/IEC DIS 23090-5 Video-based Point Cloud Compression", ISO/IEC JTC 1/SC 29/WG 11 N18670, 2019-10-10
Non-Patent Document 8: Danillo Graziosi and Ali Tabatabai, "[V-PCC] New Contribution on Patch Coding", ISO/IEC JTC1/SC29/WG11 MPEG2018/ m47505, March 2019, Geneva, CH
Patent Document 1: (described above)

That is, contents described in the above-described non-patent documents and patent document, contents of other documents referred to in the above-described non-patent documents and patent document, and the like serve as bases for determining support requirements.

### <Point cloud>

Conventionally, there has been 3D data such as a point cloud representing a three-dimensional structure with point position information, attribute information, and the like.

For example, in a case of a point cloud, a three-dimensional structure (three-dimensional shaped object) is expressed as a set of a large number of points. The data of the point cloud (also referred to as point cloud data) includes position information of each point (also referred to as geometry data) and attribute information (also referred to as attribute data) of each point. The attribute data can include any information. For example, color information, reflectance information, normal line information, or the like of each point may be included in the attribute data. Thus, the point cloud data has a relatively simple data structure, and can express an arbitrary three-dimensional structure with sufficient accuracy by using a sufficiently large number of points.

### <Overview of video-based approach>

In a video-based approach, geometry data and attribute data of such a point cloud are projected onto a two-dimensional plane for each small region. An image obtained by projecting geometry data and attribute data onto the two-dimensional plane is also referred to as a projected image. Furthermore, a projected image in each small region is referred to as a patch. For example, in the projected image (patch) of geometry data, position information of a point is represented as position information in a direction perpendicular to a projection plane (depth direction) (depth value (Depth)).

Then, each patch generated in this manner is disposed in the frame image. A frame image in which patches of geometry data are arranged is also referred to as a geometry video frame. Furthermore, a frame image in which patches of attribute data are arranged is also referred to as a color video frame. For example, each pixel value of the geometry video frame indicates the depth value described above.

Then, these video frames are encoded by an encoding method for two-dimensional images, such as Advanced Video Coding (AVC) or High Efficiency Video Coding (HEVC), for example. That is, point cloud data that is 3D data representing a three-dimensional structure can be encoded by using a codec for two-dimensional images.

### <Occupancy map>

Note that, in a case of such a video-based approach, an occupancy map can be further used. The occupancy map is map information indicating presence or absence of a projected image (patch) in the geometry video frame. For example, in the geometry video frame or color video frame, the occupancy map indicates a region where there is a patch by using a value "1" and a region where there is no patch by using a value "0".

Such an occupancy map is encoded as data different from the geometry video frame or color video frame and transmitted to a decoding side. A decoder can grasp, with reference to the occupancy map, whether or not the region is a region where there is a patch, and therefore can reduce influence of noise or the like caused by encoding/decoding and can restore 3D data more accurately. For example, even if a depth value changes due to the encoding/decoding, the decoder can ignore a depth value of a region where there is no patch (does not process the depth value as position information of the 3D data) with reference to the occupancy map.

Note that, similarly to the geometry video frame, the color video frame, or the like, the occupancy map can also be transmitted as a video frame (that is, can be encoded/decoded by the codec for two-dimensional images).

### <Polar coordinate system>

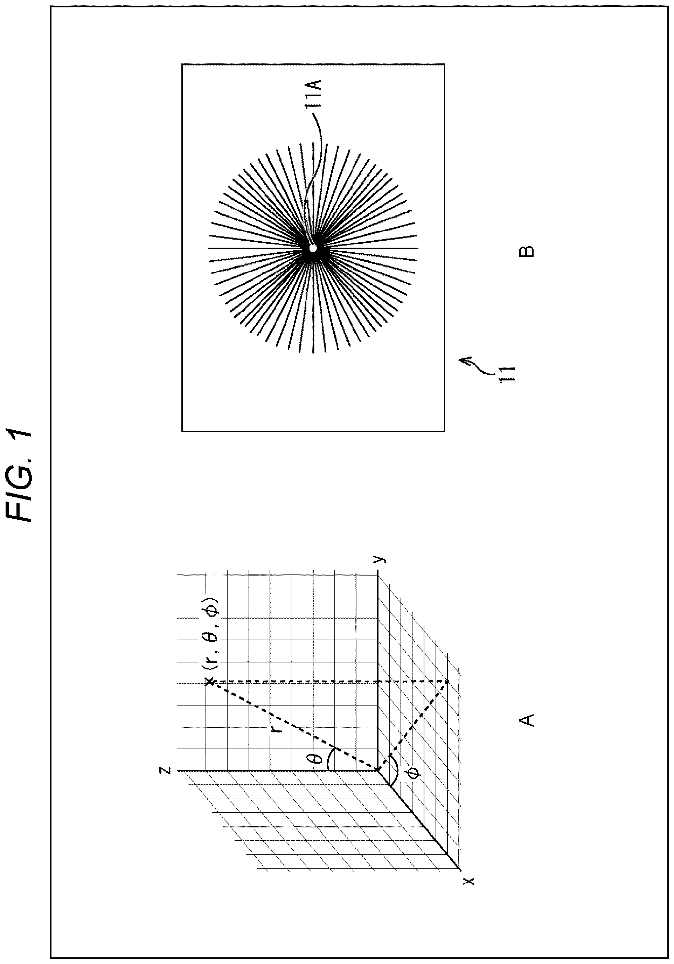

Although geometry data of a point cloud generally represents a three-dimensional position of each point in an orthogonal coordinate system (x, y, z), the three-dimensional position of each point may be represented in a coordinate system using an angular component such as a polar coordinate system, for example. In a case of the polar coordinate system, a three-dimensional position of a point is represented by a distance r from a reference point (origin), an angle ϕ in a horizontal direction (on an X-Y plane), and an angle θ from a z axis (perpendicular to the X-Y plane) as illustrated in A of Fig. 1.

### <LiDAR data>

Incidentally, there is LiDAR (light detection and ranging, or laser imaging detection and ranging) data obtained by measuring scattered light with respect to light irradiation and by analyzing a distance to a subject at a long distance and a property of the subject.

When LiDAR data is generated, for example, linear scanning is performed while changing the angle θ in the polar coordinate system. Then, while changing ϕ in the polar coordinate system, such scanning is repeated to scan an entire circumference. By performing scanning with such a procedure, LiDAR data 11 indicating a result of detecting a body around an observation point 11A as illustrated in B of Fig. 1 is generated. That is, the LiDAR data 11 includes a set of linear scan data. That is, as in the example in B of Fig. 1, a plurality of linear scan data is radially distributed around the observation point 11A.

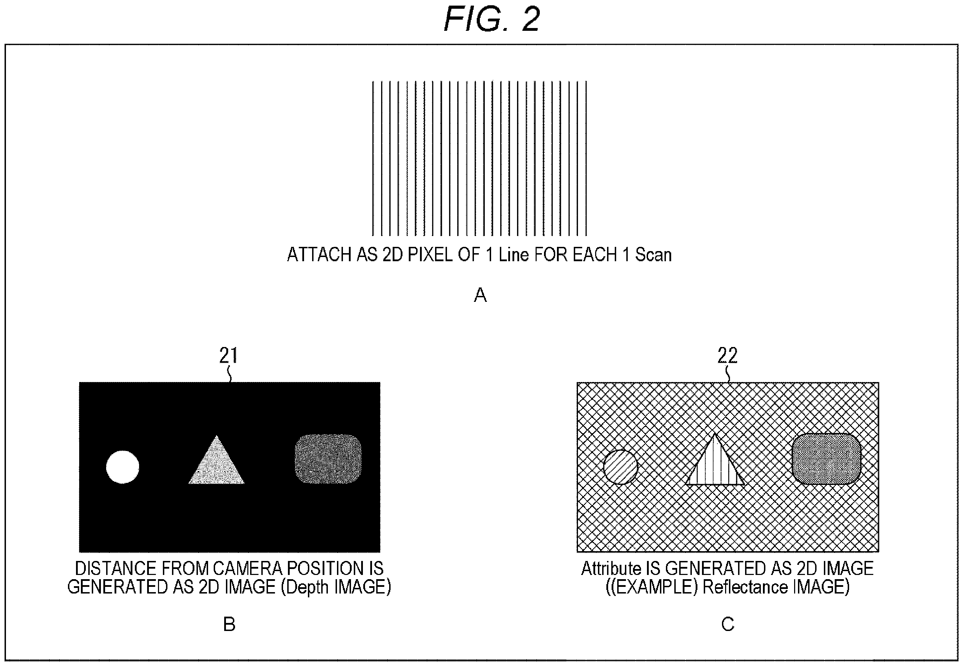

Non-Patent Document 5 and Patent Document 1 propose a method in which such LiDAR data is encoded with an encoding method for two-dimensional images, as in the above-described video-based approach. For example, LiDAR data is transformed into an image by combining a plurality of linear scan data of the LiDAR data as illustrated in A of Fig. 2. That is, each scan data of the LiDAR data turns into one pixel column different from each other in a two-dimensional image. Because the point cloud data (scan data) includes geometry data (position information) and attribute data (attribute information), there are generated, by the above-described method, a depth image 21 which has depth information as a pixel value, the depth information indicating a distance from an observation point to a detected body (point) as illustrated in B of Fig. 2, and an attribute image 22, which has attribute data (for example, texture, reflectance, or the like) of each point as a pixel value, as illustrated in C of Fig. 2. That is, the depth image 21 and the attribute image 22 are obtained by arranging scan data in a planar shape.

The depth image 21 indicates depth information as a pixel value (luminance value) for each pixel. For example, the shorter the distance from the observation point, the larger the pixel value (higher luminance), and the farther the distance from the observation point, the smaller the pixel value (lower luminance).

In a case of the example in B of Fig. 2, a circular object, a triangular object, and a rounded-corner rectangular object are detected in the depth image 21. Among the objects, the circular object, which is brightest (whiter), is closest to the observation point, and the rounded-corner rectangular object, which is darkest (blacker), is farthest from the observation point. Note that pixels of parts other than these objects are represented with a depth value of infinity (that is, black).

The attribute image 22 indicates attribute data (texture, reflectance, or the like, for example) as a pixel value for each pixel. For example, in a pixel at a position corresponding to each object in the depth image 21, attribute data of the object is represented as a pixel value.

Then, these images are encoded by the encoding method for two-dimensional images.

On the decoding side, the encoded data is decoded by a decoding method for two-dimensional images to generate the depth image 21 in B of Fig. 2 and the attribute image 22 in C of Fig. 2, and LiDAR data 11 as illustrated in B of Fig. 1 is reconstructed by rearranging each of the scan data.

Thus, it is possible to apply an encoding/decoding method for two-dimensional images, which is more general than the encoding/decoding method for three-dimensional data, and therefore, the LiDAR data can be encoded/decoded more easily. Therefore, it is possible to reduce an increase in cost for encoding/decoding or to perform processing at a higher speed.

In a case of this method, however, each scan data is aligned with pixel positions in the two-dimensional image, but there may be a case where positions of respective points do not completely coincide with the pixel positions. Even if motion or sensing rate of a sensor is controlled so that the point positions coincide with the pixel positions, there may be actually a case where the positions of the respective points do not completely coincide with pixel positions due to, for example, occurrence of deviation (error) in the positions of or motion of the sensor or the like. For example, one piece of scan data may be curved. As described above, there has been a possibility that, when the scan data is aligned with the pixel positions in the two-dimensional image, the positions are quantized and information amount of geometry data is reduced, by which quality of the point cloud is reduced.

### transmission of angle information>

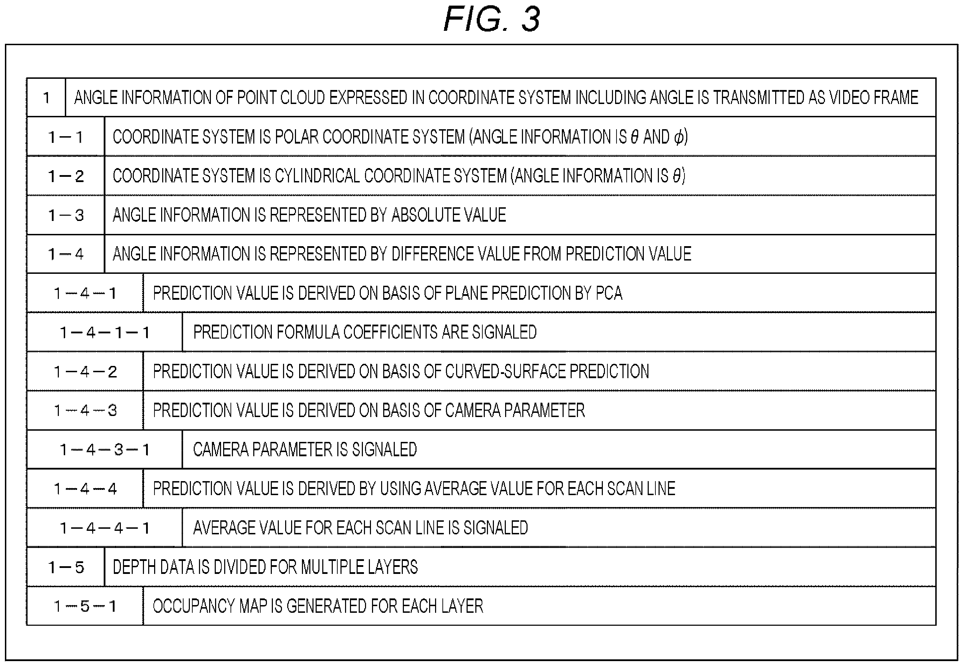

Therefore, as illustrated in the first row (uppermost row) from the top of the table illustrated in Fig. 3, a position of each point of the point cloud is expressed in a coordinate system including an angle, and an angular component (angle information) of each point is transmitted as a video frame (Method 1).

For example, an angle image having, as a pixel value, information indicating an angular component of the geometry data of the point cloud expressing a three-dimensional shaped object as a set of points is generated, and the generated angle image is encoded.

For example, in the image processing apparatus, there are provided an angle image generation unit that generates an angle image having, as a pixel value, information indicating an angular component of the geometry data of the point cloud expressing a three-dimensional shaped object as a set of points, and an angle image encoding unit that encodes the angle image generated by the angle image generation unit.

Thus, the angle information can be provided to a reception side. On the reception side, the point cloud is constructed by using the angle information.

For example, the encoded data is decoded to generate an angle image having, as a pixel value, information indicating an angular component of the geometry data of the point cloud expressing a three-dimensional shaped object as a set of points, and the point cloud is constructed by using the generated angle image.

For example, in the image processing apparatus, there are provided an angle image decoding unit that decodes the encoded data to generate an angle image having, as a pixel value, information indicating an angular component of the geometry data of the point cloud expressing a three-dimensional shaped object as a set of points, and a construction unit that constructs the point cloud by using the angle image generated by the angle image decoding unit.

Thus, it is possible to reduce reduction in the information amount of geometry data due to encoding/decoding. That is, it is possible to reduce deterioration in the quality of the point cloud.

Note that the above-described "coordinate system including an angle" representing a position of each point may be, for example, a polar coordinate system having angular components θ and ϕ, as described in the second row from the top of the table illustrated in Fig. 3 (Method 1-1). The polar coordinate system is a coordinate system as illustrated in A of Fig. 1, and is represented by a distance r from the reference point (origin), an angle ϕ in the horizontal direction (on the X-Y plane), and an angle θ from the z axis (perpendicular to the X-Y plane). In this case, the angle information includes two components θ and ϕ. That is, in this case, two angle images are generated for a depth image.

Furthermore, the above-described "coordinate system including an angle" representing a position of each point may be, for example, a cylindrical coordinate system having an angular component θ, as described in the third row from the top of the table illustrated in Fig. 3 (Method 1-2). The cylindrical coordinate system is represented by a z axis (a perpendicular direction with respect to an X-Y plane) coordinate z, a distance r from a z axis, and an angle θ in a horizontal direction (on the X-Y plane). In this case, angle information includes one component θ. That is, in this case, one angle image is generated for a depth image.

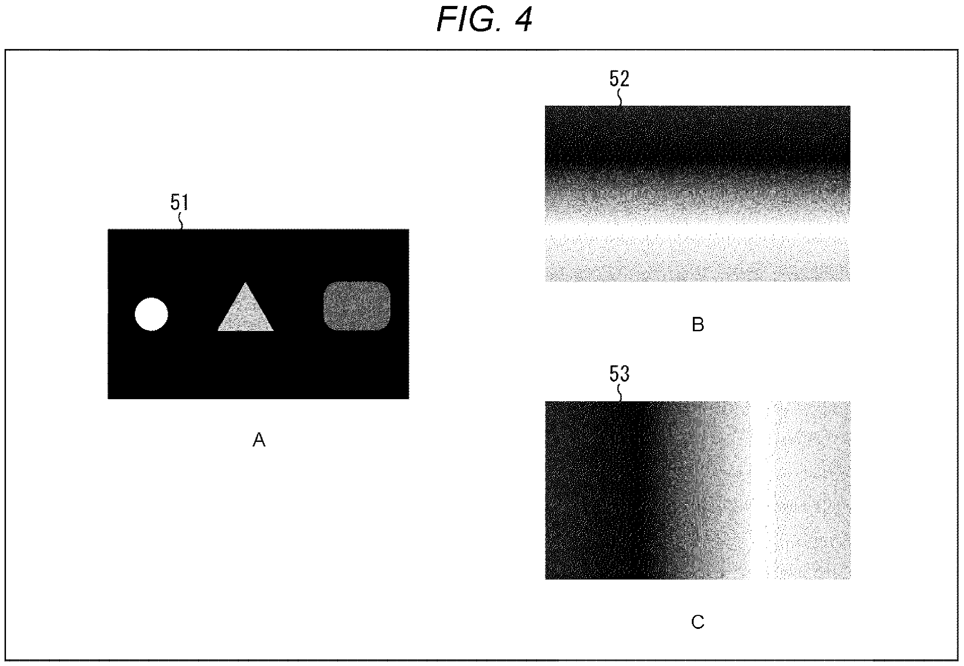

For example, when geometry data is expressed in the polar coordinate system, an angle image 52 and an angle image 53 as illustrated in B of Fig. 4 are generated with respect to a depth image 51 illustrated in A of Fig. 4. Similarly to the depth image 21 in B of Fig. 2, the depth image 51 is an image having, as a pixel value, depth information indicating a distance from an observation point to a detected body (point).

Meanwhile, the angle image 52 is an image in which the angular component θ of geometry data serves as a pixel value. Each pixel of the angle image 52 corresponds to each pixel of the depth image 51. That is, a pixel value of each pixel of the angle image 52 indicates a sensing direction (angular component θ) for which a pixel value (depth information) of a pixel corresponding to the depth image 51 is obtained. For example, a larger pixel value (luminance value) indicates a larger value θ, and a smaller pixel value (luminance value) indicates a smaller value θ. Because the angular component θ changes in one piece of scan data, pixel values of the angle image 52 change in a longitudinal direction as in the example in B of Fig. 4. However, in general, as described above, due to an error in motion of the sensor or the like, changes in pixel values of the angle image 52 are not completely uniform (ideal state) in an entire image.

The angle image 53 is an image in which the angular component ϕ of geometry data serves as a pixel value. Each pixel of the angle image 53 corresponds to each pixel of the depth image 51. That is, each pixel of the angle image 53 corresponds to each pixel of the depth image 51. That is, a pixel value of each pixel of the angle image 52 indicates a sensing direction (angular component ϕ) for which a pixel value (depth information) of a pixel corresponding to the depth image 51 is obtained. For example, a larger pixel value (luminance value) indicates a larger value ϕ, and a smaller pixel value (luminance value) indicates a smaller value ϕ. Because the angular component ϕ changes between each scan data, pixel values of the angle image 53 change in a lateral direction as in the example in C of Fig. 4. However, in general, as described above, due to an error in motion of the sensor or the like, changes in pixel values of the angle image 53 are not completely uniform (ideal state) in an entire image.

For such angle image 52 and angle image 53, for example, as described in the fourth row from the top of the table illustrated in Fig. 3, each pixel value may be configured with an absolute value of an angular component (θ or ϕ) of geometry data of each point (Method 1-3). For example, as in the angle image 52 and the angle image 53, each pixel value may indicate an absolute value of an angular component of a point corresponding to a position of the pixel. Furthermore, a negative value may be included instead of an absolute value.

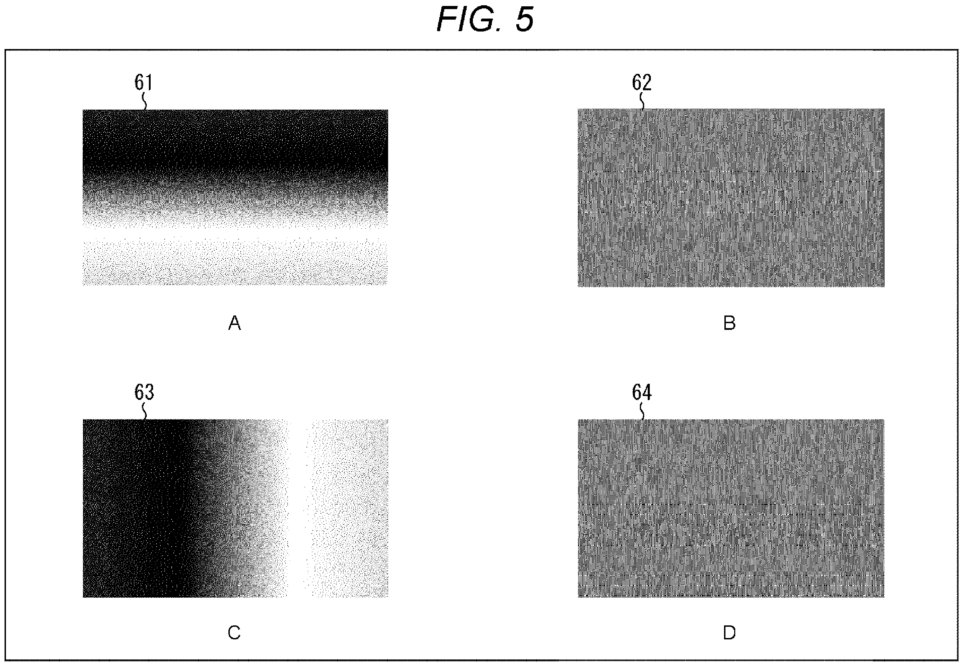

For example, as described in the fifth row from the top of the table illustrated in Fig. 3, each pixel value of an angle image may be configured with a prediction residual that is a difference from a prediction value of an angular component of geometry data of each point (Method 1-4). For example, for the angle image 52 including the angular component θ, an image 61 including a prediction value as illustrated in A of Fig. 5 is derived by a predetermined method. Between the angle image 52 and the image 61 thereof, a difference value (prediction residual) is derived for each pixel. Then, an angle image 62 including a prediction residual, as illustrated in B of Fig. 5, is derived. Similarly, for the angle image 53 including the angular component ϕ, an image 63 including a prediction value as illustrated in C of Fig. 5 is derived by a predetermined method. Between the angle image 53 and the image 63 thereof, a difference value (prediction residual) is derived for each pixel. Then, an angle image 64 including a prediction residual, as illustrated in D of Fig. 5, is derived. These angle images 62 and 64 are encoded as video frames.

On the decoding side, an angular component of each point is derived by using prediction residuals of the angle images 62 and 64 generated by decoding encoded data, and a point cloud is constructed by using the derived angular component.

Because pixel values of the angle images 62 and 64 are configured by the prediction residual, the pixel values are generally smaller than pixel values of the angle images 52 and 53, and an increase in amount of encoding can be reduced.

A method for deriving the prediction value is arbitrary. Furthermore, information regarding prediction that derives the prediction value may be signaled. For example, the information regarding the prediction may be encoded. Furthermore, encoded data may be decoded to generate the information regarding the prediction.

For example, as described in the sixth row from the top of the table illustrated in Fig. 3, a prediction value may be derived on the basis of plane prediction by principal component analysis (PCA) (Method 1-4-1). That is, a plane (ax + by + c = z) may be obtained from each pixel value by the PCA, and each pixel value updated so as to be positioned on the plane may be used as a prediction value.

Furthermore, as described in the seventh row from the top of the table illustrated in Fig. 3, a parameter (for example, coefficients a, b, and c of a prediction formula ax + by + c = z) representing the plane may be signaled (Method 1-4-1-1). That is, the parameter may be encoded. Furthermore, encoded data may be decoded to generate the parameter.

For example, as described in the eighth row from the top of the table illustrated in Fig. 3, a prediction value may be derived on the basis of curved-surface prediction (Method 1-4-2). That is, a curved surface may be obtained from each pixel value, and each pixel value updated so as to be positioned on the curved surface may be used as a prediction value. Furthermore, a parameter representing the curved surface may be signaled.

For example, as described in the ninth row from the top of the table illustrated in Fig. 3, a prediction value may be derived on the basis of a camera parameter (Method 1-4-3). That is, motion of a camera may be predicted on the basis of a parameter related to a position or motion of a camera used as a sensor, and a prediction value of each pixel may be derived on the basis of the predicted motion. That is, an angular component in sensing in an ideal state where there is no error, noise, or the like may be used as a prediction value.

Furthermore, as described in the 10th row from the top of the table illustrated in Fig. 3, the camera parameter may be signaled (Method 1-4-3-1). That is, the camera parameter may be encoded. Furthermore, encoded data may be decoded to generate the camera parameter.

For example, as described in the 11th row from the top of the table illustrated in Fig. 3, an average value of pixel values for each scan line may be derived as a prediction value (Method 1-4-4). That is, the average value of the pixel values may be derived for each pixel column and used as the prediction value.

Furthermore, as described in the 12th row from the top of the table illustrated in Fig. 3, an average value for each scan line may be signaled (Method 1-4-4-1). That is, the average value may be encoded. Furthermore, encoded data may be decoded to generate the average value.

### <Dividing depth image for multiple layers>

Although each pixel value of a depth image is depth information, in general, a detection range of LiDAR is wide, and thus a depth value range tends to be wide. That is, if the depth value range is too wide, a bit depth of pixel values of the depth image is insufficient, and all the depth values may not be able to be expressed. For example, even if the bit depth of the depth image is 16 bits, the depth value range may be wider than that, and there may be a case where all accuracy cannot be expressed with the 16 bits. Furthermore, for example, there may be a case where the depth value is of float accuracy in which the range tends to be wider.

Therefore, as described in the 13th row from the top of the table illustrated in Fig. 3, depth data may be divided for multiple layers and transmitted (Method 1-5). That is, each pixel value (depth value) of the depth image may be classified according to a magnitude thereof, and a plurality of layers may be generated in the depth image. Furthermore, encoded data may be decoded to generate a depth image for each layer classified according to a magnitude of a depth value.

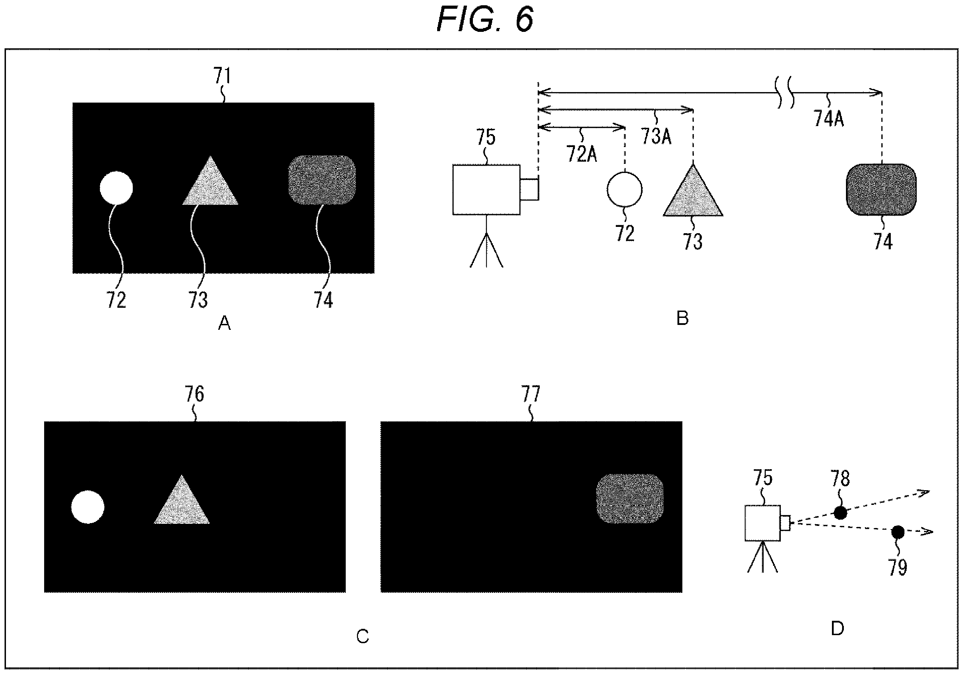

For example, it is assumed that a depth image 71 illustrated in A of Fig. 6 is a depth image including a short distance to a long distance (having a wide range). It is assumed that the depth image 71 includes depth values of a circular object 72, triangular object 73, and rounded-corner rectangular object 74. As illustrated in B of Fig. 6, among these objects, the circular object 72 is closest to a camera 75 (double-headed arrow 72A). The triangular object 73 is then closer to the camera 75 (double-headed arrow 73A). As compared to these objects, the rounded-corner rectangular object 74 is considerably farther from the camera 75 (double-headed arrow 74A). In such a case, if all the objects are included as in the depth image 71, the depth value range is too wide for the bit depth, and there is a possibility that expression thereof is difficult.

Therefore, each pixel of the depth image 71 may be classified on the basis of a depth value thereof, and as illustrated in C of Fig. 6, a layer 76 (near area) including a depth value on a close side and a layer 77 (far area) including a depth value on a far side may be generated. In a case of the example in C of Fig. 6, the layer 76 includes the objects 72 and 73 on the close side. The layer 77 includes the object 74 on the far side.

By dividing the depth image for multiple layers in this manner, even when the depth value range is wide, it is possible to represent all the depth values with bit depths less than that. Therefore, it is possible to reduce deterioration in the quality of the point cloud.

In other words, by applying the present technology, by using an inexpensive (low-performance) encoder/decoder capable of processing narrow bit depth of an image, it is possible to encode/decode an image having a wider bit depth than that. Therefore, an increase in cost can be reduced.

In addition, this layering is performed on the basis of a magnitude of a depth value (that is, as illustrated in D of Fig. 6, a distance from the camera 75, which is an observation point, to a point). That is, for example, points 78 and 79 positioned in different directions from each other as viewed from the camera 75 can also be classified and placed into different layers from each other.

Note that the number of layers is arbitrary. Three or more layers may be formed. The number of layers may be variable. Furthermore, a range of the depth values assigned to each layer is arbitrary. The ranges of the depth values of the layers may be the same or different from each other. Furthermore, the range of the depth value of each layer may be variable. Expressible accuracy can be set according to a width of a range of a depth value. For example, a range of a depth value may be set wider for a layer including a part with high priority, such as a layer corresponding to a depth value on the close side or a layer including a depth value with a high density of points. Furthermore, a range of a depth value may be set narrower for a layer including only a part with low priority, such as a layer corresponding to a depth value on the far side or a layer including a depth value with a low density of points.

Furthermore, in the depth image, a pixel value of a pixel having no depth value (position where a body has not been detected) may be 0, or may be a value other than 0, for example, an average value of peripheral pixel values, or the like. When applying an encoding method for two-dimensional images in which prediction is performed with reference to peripheral pixels, in general, it is possible to reduce a reduction in encoding efficiency more if this pixel value is set to a value other than 0 than in a case where this pixel value is set to 0. When this pixel value is set to a value other than 0, when the depth value is extracted from the depth image by unpacking, the pixel value is only required to be excluded by using an occupancy map.

### <Occupancy map>

An occupancy map indicating a region in the depth image may be signaled to the depth image, the region including useful information. That is, such an occupancy map may be encoded. Furthermore, encoded data may be decoded to generate such an occupancy map.

In this case, for each pixel or for each of a plurality of pixels, the occupancy map can indicate regions in the depth image, the regions including useful information. For example, each pixel of the occupancy map corresponds to each pixel of the depth image. A pixel having a value "1" in the occupancy map indicates that a pixel at the same position in the depth image has a useful depth value. A pixel having a value "0" in the occupancy map indicates that there is no depth value in a pixel at the same position in the depth image. By performing unpacking of the depth image by utilizing the occupancy map having such a configuration, it is possible to more easily extract the useful depth value.

When the depth image has a plurality of layers, as described in the 14th row from the top (bottom row) of the table illustrated in Fig. 3, an occupancy map may be generated for each layer, and transmitted (Method 1-5-1). That is, an occupancy map may be generated for each layer of the depth image. Furthermore, encoded data may be decoded to generate an occupancy map for each layer of the depth image. The encoded data is decoded to generate an occupancy map generated for each the layer of the depth image and indicating a region in the depth image, the region including useful information Thus, in unpacking, a useful depth value can be more easily extracted from each layer of the depth image.

### <2. First embodiment>

### <Encoding apparatus>

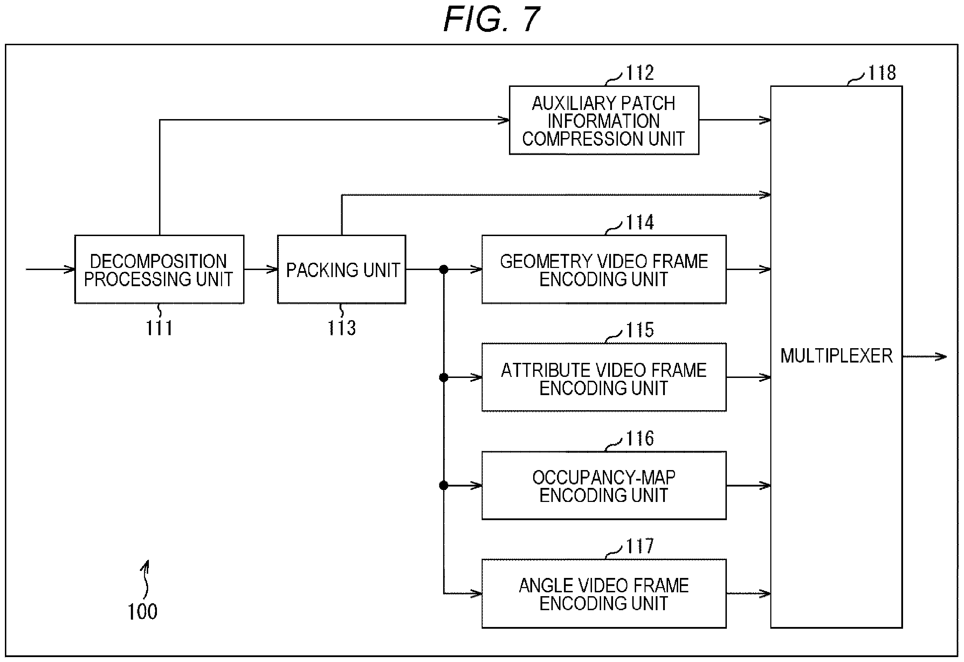

Fig. 7 is a block diagram illustrating an example of a configuration of an encoding apparatus that is an embodiment of an image processing apparatus to which the present technology is applied. An encoding apparatus 100 illustrated in Fig. 7 is an apparatus that encodes, with an encoding method for two-dimensional images, point cloud data (LiDAR data) as a video frame.

Note that Fig. 7 illustrates a main configuration including processing units, data flows, and the like, and the processing units and data flows illustrated in Fig. 7 are not necessarily all. That is, in the encoding apparatus 100, there may be a processing unit not illustrated as a block in Fig. 7, or there may be processing or data flow not illustrated as an arrow, or the like, in Fig. 7.

As illustrated in Fig. 7, the encoding apparatus 100 includes a decomposition processing unit 111, an auxiliary patch information compression unit 112, a packing unit 113, a geometry video frame encoding unit 114, an attribute video frame encoding unit 115, an occupancy-map encoding unit 116, an angle video frame encoding unit 117, and a multiplexer 118.

The decomposition processing unit 111 performs processing related to decomposition of geometry data. For example, the decomposition processing unit 111 acquires LiDAR data that is a point cloud and input to the encoding apparatus 100. Furthermore, as described above in <1. Two-dimensional image encoding of LiDAR data>, the decomposition processing unit 111 decomposes geometry data expressed with polar coordinates (coordinate system including angular components) of the acquired LiDAR data to extract the angular components, and generates angle information including the angular components. In other words, the decomposition processing unit 111 generates depth information that is a distance component from an observation point.

The decomposition processing unit 111 supplies the generated angle information and depth information to the packing unit 113 together with attribute data. Furthermore, the decomposition processing unit 111 supplies the auxiliary patch information compression unit 112 with information (for example, information regarding an observation point position, a camera parameter, or the like) used for the generation of the angle information or depth information, as auxiliary patch information.

The auxiliary patch information compression unit 112 performs processing related to compression of the auxiliary patch information. For example, the auxiliary patch information compression unit 112 acquires the auxiliary patch information supplied from the decomposition processing unit 111. The auxiliary patch information compression unit 112 encodes (compresses) the acquired auxiliary patch information with an encoding method other than the encoding method for two-dimensional images. The auxiliary patch information may include information regarding prediction that derives a prediction value, the information being supplied from the decomposition processing unit 111. Furthermore, the encoding method is arbitrary as long as the method is not for two-dimensional images. The auxiliary patch information compression unit 112 supplies the obtained encoded data of the auxiliary patch information to the multiplexer 118.

The packing unit 113 performs processing related to data packing. For example, the packing unit 113 acquires geometry data (depth information or angle information) and attribute data that are supplied from the decomposition processing unit 111. Furthermore, as described above in <1. Two-dimensional image encoding of LiDAR data>, the packing unit 113 generates a depth image that is a two-dimensional image having the acquired depth information as a pixel value. At that time, the packing unit 113 can also divide the depth image for multiple layers. The packing unit 113 regards the depth image as a video frame and generates a geometry video frame. When the depth image is divided for multiple layers, the packing unit 113 regards each layer of the depth image as a video frame and generates the geometry video frame.

Moreover, as described above in <1. Two-dimensional image encoding of LiDAR data>, the packing unit 113 generates an angle image that is a two-dimensional image having the acquired angle information (or information derived from the angle information) as a pixel value. The packing unit 113 regards the angle image as a video frame and generates an angle video frame.

Furthermore, the packing unit 113 generates an attribute image that is a two-dimensional image having the acquired attribute data as a pixel value. The packing unit 113 regards the attribute image as a video frame and generates an attribute video frame.

Moreover, as described above in <1. Two-dimensional image encoding of LiDAR data>, the packing unit 113 generates an occupancy map indicating, to the depth image, whether or not a region includes useful information. Note that, when the depth image includes a plurality of layers, the packing unit 113 can generate an occupancy map for each layer.

The packing unit 113 regards the occupancy map as a video frame. Note that, when an occupancy map is generated for each layer of the depth image, the packing unit 113 regards an occupancy map corresponding to each depth image as a video frame.

The packing unit 113 supplies them to the processing units in subsequent stages. For example, the packing unit 113 supplies the geometry video frame to the geometry video frame encoding unit 114. Furthermore, the packing unit 113 supplies the attribute video frame to the attribute video frame encoding unit 115. Moreover, the packing unit 113 supplies the occupancy map to the occupancy-map encoding unit 116. Furthermore, the packing unit 113 supplies the angle video frame to the angle video frame encoding unit 117.

The geometry video frame encoding unit 114 performs processing related to encoding of the geometry video frame. For example, the geometry video frame encoding unit 114 acquires the geometry video frame supplied from the packing unit 113. Furthermore, as described above in <1. Two-dimensional image encoding of LiDAR data>, the geometry video frame encoding unit 114 encodes the acquired geometry video frame with the encoding method for two-dimensional images, and generates encoded data of the geometry video frame. The encoding method for two-dimensional images is arbitrary, and may be Advanced Video Coding (AVC), High Efficiency Video Coding (HEVC), or the like, for example. The geometry video frame encoding unit 114 supplies the encoded data of the geometry video frame to the multiplexer 118.

The attribute video frame encoding unit 115 performs processing related to encoding of the attribute video frame. For example, the attribute video frame encoding unit 115 acquires the attribute video frame supplied from the packing unit 113. Furthermore, the attribute video frame encoding unit 115 encodes the acquired attribute video frame with an arbitrary encoding method for two-dimensional images, such as AVC or HEVC, for example. The attribute video frame encoding unit 115 supplies the multiplexer 118 with the encoded data of the attribute video frame, the encoded data being obtained by the encoding.

The occupancy-map encoding unit 116 performs processing related to encoding of a video frame of an occupancy map. For example, the occupancy-map encoding unit 116 acquires the occupancy map supplied from the packing unit 113. Furthermore, as described above in <1. Two-dimensional image encoding of LiDAR data>, the occupancy-map encoding unit 116 encodes the acquired occupancy map with, for example, an arbitrary encoding method for two-dimensional images. The occupancy-map encoding unit 116 supplies the multiplexer 118 with the encoded data of the occupancy map, the encoded data being obtained by the encoding.

The angle video frame encoding unit 117 performs processing related to encoding of the angle video frame. For example, the angle video frame encoding unit 117 acquires the angle video frame supplied from the packing unit 113. Furthermore, as described above in <1. Two-dimensional image encoding of LiDAR data>, the angle video frame encoding unit 117 encodes the acquired angle video frame with, for example, an arbitrary encoding method for two-dimensional images, such as AVC or HEVC. The angle video frame encoding unit 117 supplies the multiplexer 118 with the encoded data of the angle video frame, the encoded data being obtained by the encoding.

The multiplexer 118 performs processing related to multiplexing. For example, the multiplexer 118 acquires the encoded data of the auxiliary patch information, the encoded data being supplied from the auxiliary patch information compression unit 112. Furthermore, the multiplexer 118 acquires the encoded data of the geometry video frame, the encoded data being supplied from the geometry video frame encoding unit 114. Moreover, the multiplexer 118 acquires the encoded data of the attribute video frame, the encoded data being supplied from the attribute video frame encoding unit 115. Furthermore, the multiplexer 118 acquires the encoded data of the occupancy map, the encoded data being supplied from the occupancy-map encoding unit 116. Moreover, the multiplexer 118 acquires the encoded data of the angle video frame, the encoded data being supplied from the angle video frame encoding unit 117.

The multiplexer 118 multiplexes these pieces of acquired information to generate a bit stream. The multiplexer 118 outputs the generated bit stream to outside of the encoding apparatus 100.

In the encoding apparatus 100 having such a configuration, each of the processing units from the decomposition processing unit 111 to the multiplexer 118 performs the processing in <1. Two-dimensional image encoding of LiDAR data> by applying the above-described present technology. Therefore, as described above in <1. Two-dimensional image encoding of LiDAR data>, the encoding apparatus 100 can reduce deterioration in quality of a point cloud.

Note that these processing units (the decomposition processing unit 111 to the multiplexer 118) have an arbitrary configuration. For example, each of the processing units may include a logic circuit that achieves the above-described processing. Furthermore, each of the processing units may have, for example, a central processing unit (CPU), a read only memory (ROM), a random access memory (RAM), and the like, and execute a program by using the CPU, the ROM, the RAM, and the like to achieve the above-described processing. Needless to say, each of the processing units may have both the configurations and part of the above-described processing may be achieved by the logic circuit, and another may be achieved by executing the program. The configurations of the processing units may be independent from each other. For example, among the processing units, some processing units may achieve part of the above-described processing with a logic circuit, some other processing units may achieve the above-described processing by executing a program, and still some other processing units may achieve the above-described processing with both a logic circuit and execution of a program.

### <Flow of encoding processing>

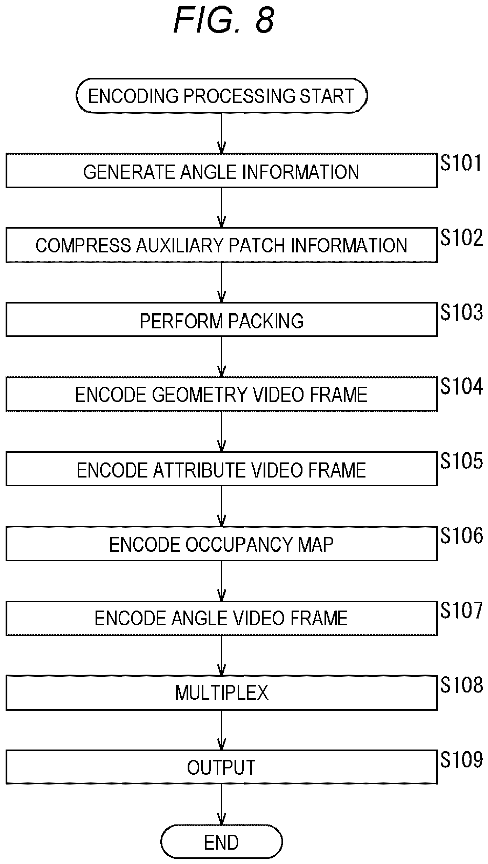

An example of a flow of encoding processing executed by the encoding apparatus 100 will be described with reference to a flowchart in Fig. 8.

When the encoding processing starts, in Step S101, the decomposition processing unit 111 of the encoding apparatus 100 decomposes geometry data to generate angle information (and depth information).

In Step S102, the auxiliary patch information compression unit 112 compresses auxiliary patch information obtained by the processing in Step S101.

In Step S103, the packing unit 113 generates a depth image by using the depth information generated in Step S101, and generates a geometry video frame. Furthermore, the packing unit 113 generates an angle image by using the angle information generated in Step S101, and generates an angle video frame. Moreover, the packing unit 113 generates an attribute video frame by using attribute data. Furthermore, the packing unit 113 generates an occupancy map corresponding to the depth image.

In Step S104, the geometry video frame encoding unit 114 encodes, with an encoding method for two-dimensional images, the geometry video frame obtained by the processing in Step S103.

In Step S105, the attribute video frame encoding unit 115 encodes, with the encoding method for two-dimensional images, the attribute video frame obtained by the processing in Step S103.

In Step S106, the occupancy-map encoding unit 116 encodes, with the encoding method for two-dimensional images, the occupancy map obtained by the processing in Step S103.

In Step S107, the angle video frame encoding unit 117 encodes, with the encoding method for two-dimensional images, the angle video frame obtained by the processing in Step S103.

In Step S108, the multiplexer 118 multiplexes various kinds of information generated as described above, and generates a bit stream including these pieces of information. In Step S109, the multiplexer 118 outputs the bit stream generated by the processing in Step S108 to the outside of the encoding apparatus 100. When the processing in step S109 ends, the encoding processing ends.

In the encoding processing in such a flow, each of the processing units from the decomposition processing unit 111 to the multiplexer 118 performs the processing in <1. Two-dimensional image encoding of LiDAR data> by applying the above-described present technology. Therefore, as described above in <1. Two-dimensional image encoding of LiDAR data>, the encoding apparatus 100 can reduce deterioration in quality of a point cloud.

### <3. Second embodiment>

### <Decoding apparatus>

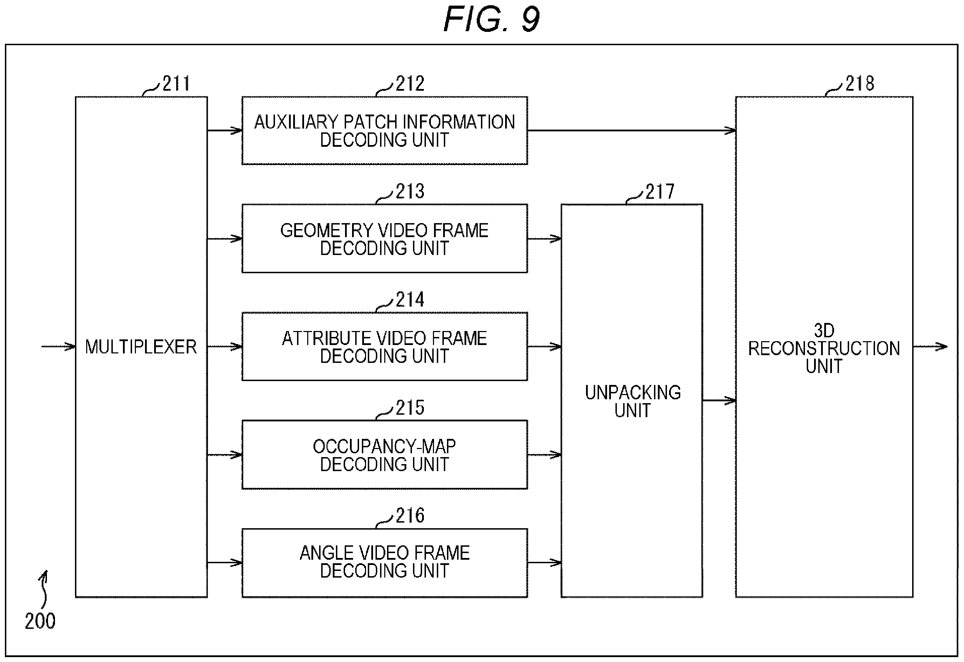

Fig. 9 is a block diagram illustrating an example of a configuration of a decoding apparatus that is an aspect of an image processing apparatus to which the present technology is applied. A decoding apparatus 200 illustrated in Fig. 9 is an apparatus that decodes, with a decoding method for two-dimensional images, encoded data obtained by encoding, with an encoding method for two-dimensional images, point cloud data (LiDAR data) as a video frame, and reconstructs the point cloud (LiDAR data) .

Note that Fig. 9 illustrates a main configuration including processing units, data flows, and the like, and the processing units and data flows illustrated in Fig. 9 are not necessarily all. That is, in the decoding apparatus 200, there may be a processing unit not illustrated as a block in Fig. 9, or there may be processing or data flow not illustrated as an arrow, or the like, in Fig. 9.

As illustrated in Fig. 9, the decoding apparatus 200 includes a demultiplexer 211, an auxiliary patch information decoding unit 212, a geometry video frame decoding unit 213, an attribute video frame decoding unit 214, an occupancy-map decoding unit 215, an angle video frame decoding unit 216, an unpacking unit 217, and a 3D reconstruction unit 218.

The demultiplexer 211 performs processing related to demultiplexing of data. For example, the demultiplexer 211 can acquire a bit stream input to the decoding apparatus 200. The bit stream is supplied from the encoding apparatus 100, for example.

Furthermore, the demultiplexer 211 can demultiplex the bit stream. For example, with demultiplexing, the demultiplexer 211 can extract encoded data of auxiliary patch information from the bit stream. Furthermore, with demultiplexing, the demultiplexer 211 can extract encoded data of a geometry video frame from the bit stream. Moreover, with demultiplexing, the demultiplexer 211 can extract encoded data of an attribute video frame from the bit stream. Furthermore, with demultiplexing, the demultiplexer 211 can extract encoded data of an occupancy map from the bit stream. Moreover, with demultiplexing, the demultiplexer 211 can extract encoded data of an angle video frame from the bit stream.

Moreover, the demultiplexer 211 can supply extracted data to the processing units in subsequent stages. For example, the demultiplexer 211 can supply the extracted encoded data of the auxiliary patch information to the auxiliary patch information decoding unit 212. Furthermore, the demultiplexer 211 can supply the extracted encoded data of the geometry video frame to the geometry video frame decoding unit 213. Moreover, the demultiplexer 211 can supply the extracted encoded data of the attribute video frame to the attribute video frame decoding unit 214. Furthermore, the demultiplexer 211 can supply the extracted encoded data of the occupancy map to the occupancy-map decoding unit 215. Moreover, the demultiplexer 211 can supply the extracted encoded data of the angle video frame to the angle video frame decoding unit 216.

The auxiliary patch information decoding unit 212 performs processing related to decoding of the encoded data of the auxiliary patch information. For example, the auxiliary patch information decoding unit 212 can acquire the encoded data of the auxiliary patch information, the encoded data being supplied from the demultiplexer 211. Furthermore, the auxiliary patch information decoding unit 212 can decode the encoded data to generate auxiliary patch information. The auxiliary patch information may include information regarding prediction that derives a prediction value of angle information. Furthermore, the decoding method is arbitrary as long as the method is a method (decoding method not for two-dimensional images) corresponding to an encoding method applied at a time of encoding (for example, an encoding method applied by an auxiliary patch information compression unit 112). Moreover, the auxiliary patch information decoding unit 212 supplies the auxiliary patch information to the 3D reconstruction unit 218.

The geometry video frame decoding unit 213 performs processing related to decoding of the encoded data of the geometry video frame. For example, the geometry video frame decoding unit 213 can acquire the encoded data of the geometry video frame, the encoded data being supplied from the demultiplexer 211. Furthermore, the geometry video frame decoding unit 213 can decode the encoded data to generate a geometry video frame. Moreover, the geometry video frame decoding unit 213 can supply the geometry video frame to the unpacking unit 217.

The attribute video frame decoding unit 214 performs processing related to decoding of the encoded data of the attribute video frame. For example, the attribute video frame decoding unit 214 can acquire the encoded data of the attribute video frame, the encoded data being supplied from the demultiplexer 211. Furthermore, the attribute video frame decoding unit 214 can decode the encoded data to generate an attribute video frame. Moreover, the attribute video frame decoding unit 214 can supply the attribute video frame to the unpacking unit 217.

The occupancy-map decoding unit 215 performs processing related to decoding of the encoded data of the occupancy map. For example, the occupancy-map decoding unit 215 can acquire the encoded data of the occupancy map, the encoded data being supplied from the demultiplexer 211. Furthermore, the occupancy-map decoding unit 215 can decode the encoded data to generate an occupancy map. Moreover, the occupancy-map decoding unit 215 can supply the occupancy map to the unpacking unit 217.

The angle video frame decoding unit 216 performs processing related to decoding of the encoded data of the angle video frame. For example, the angle video frame decoding unit 216 can acquire the encoded data of the angle video frame, the encoded data being supplied from the demultiplexer 211. Furthermore, the angle video frame decoding unit 216 can decode the encoded data to generate an angle video frame. Moreover, the angle video frame decoding unit 216 can supply the angle video frame to the unpacking unit 217.

The unpacking unit 217 performs processing related to unpacking. For example, the unpacking unit 217 can acquire the geometry video frame supplied from the geometry video frame decoding unit 213. Moreover, the unpacking unit 217 can acquire the attribute video frame supplied from the attribute video frame decoding unit 214. Furthermore, the unpacking unit 217 can acquire the occupancy map supplied from the occupancy-map decoding unit 215. Moreover, the unpacking unit 217 can acquire the angle video frame supplied from the angle video frame decoding unit 216.

Moreover, the unpacking unit 217 can unpack, on the basis of the occupancy map, the geometry video frame, the attribute video frame, and the angle video frame, and can generate (restore) depth information, angle information, attribute data, and the like.

Furthermore, the unpacking unit 217 can supply the 3D reconstruction unit 218 with the generated depth information, angle information, attribute data, and the like.

The 3D reconstruction unit 218 performs processing related to reconstruction of 3D data. For example, the 3D reconstruction unit 218 can acquire the auxiliary patch information supplied from the auxiliary patch information decoding unit 212. Furthermore, the 3D reconstruction unit 218 can acquire the depth information, angle information, attribute data (that is, geometry data and attribute data), and the like supplied from the unpacking unit 217. The 3D reconstruction unit 218 reconstructs the point cloud (LiDAR data) by using these pieces of information.

The 3D reconstruction unit 218 outputs the point cloud data (LiDAR data) obtained by such processing to outside of the decoding apparatus 200. The point cloud data (LiDAR data) is rendered and displayed on a display unit, recorded on a recording medium, or supplied to another apparatus via communication, for example.

In the decoding apparatus 200 having such a configuration, each of the processing units from the demultiplexer 211 to the 3D reconstruction unit 218 performs the processing in <1. Two-dimensional image encoding of LiDAR data> by applying the above-described present technology. Therefore, as described above in <1. Two-dimensional image encoding of LiDAR data>, the decoding apparatus 200 can reduce deterioration in quality of a point cloud.

Note that these processing units (the demultiplexer 211 to the 3D reconstruction unit 218) have an arbitrary configuration. For example, each of the processing units may include a logic circuit that achieves the above-described processing. Furthermore, each of the processing units may have, for example, a CPU, a ROM, a RAM, and the like, and execute a program by using the CPU, the ROM, the RAM, and the like to achieve the above-described processing. Needless to say, each of the processing units may have both the configurations and part of the above-described processing may be achieved by the logic circuit, and another may be achieved by executing the program. The configurations of the processing units may be independent from each other. For example, among the processing units, some processing units may achieve part of the above-described processing with a logic circuit, some other processing units may achieve the above-described processing by executing a program, and still some other processing units may achieve the above-described processing with both a logic circuit and execution of a program.

### <Flow of decoding processing>

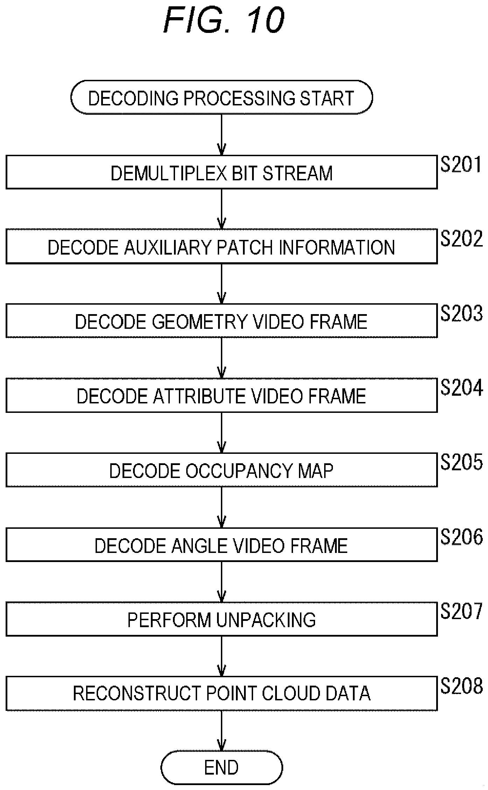

An example of a flow of decoding processing executed by such a decoding apparatus 200 will be described with reference to a flowchart in Fig. 10.

When the decoding processing starts, in Step S201, the demultiplexer 211 of the decoding apparatus 200 demultiplexes a bit stream.

In Step S202, the auxiliary patch information decoding unit 212 decodes encoded data of auxiliary patch information, the encoded data being extracted from the bit stream by the processing in Step S201.

In Step S203, the geometry video frame decoding unit 213 decodes encoded data of a geometry video frame, the encoded data being extracted from the bit stream by the processing in Step S201.

In Step S204, the attribute video frame decoding unit 214 decodes encoded data of an attribute video frame, the encoded data being extracted from the bit stream by the processing in Step S201.

In Step S205, the occupancy-map decoding unit 215 decodes encoded data of an occupancy map, the encoded data being extracted from the bit stream by the processing in Step S201.

In Step S206, the angle video frame decoding unit 216 decodes encoded data of an angle video frame, the encoded data being extracted from the bit stream by the processing in Step S201.

In Step S207, the unpacking unit 217 unpacks the geometry video frame on the basis of the occupancy map or the like, and generates (restores) depth information. Furthermore, the unpacking unit 217 unpacks the attribute video frame on the basis of the occupancy map or the like, and generates (restores) attribute data. Moreover, the unpacking unit 217 unpacks the angle video frame on the basis of the occupancy map or the like, and generates (restores) angle information.

In Step S208, the 3D reconstruction unit 218 reconstructs the point cloud data (LiDAR data) on the basis of the auxiliary patch information generated in Step S202 and various kinds of information obtained in Step S207. When the processing in Step S208 ends, the decoding processing ends.

In the decoding processing in such a flow, each of the processing units from the demultiplexer 211 to the 3D reconstruction unit 218 performs the processing in <1. Two-dimensional image encoding of LiDAR data> by applying the above-described present technology. Therefore, as described above in <1. Two-dimensional image encoding of LiDAR data>, the decoding apparatus 200 can reduce deterioration in quality of a point cloud.

### <4. Supplementary note>

### <Point cloud data>

Although LiDAR data has been described above as an example of the point cloud data, the point cloud data may be other than LiDAR data. That is, the present technology can be applied to arbitrary point cloud data.

### <Computer>

The above-described series of processing can be executed by hardware or can be executed by software. When a series of processing is executed by software, a program included in the software is installed on a computer. Here, examples of the computer include a computer incorporated in dedicated hardware, a general-purpose personal computer, for example, which is capable of executing various kinds of functions by installing various kinds of programs, or the like.

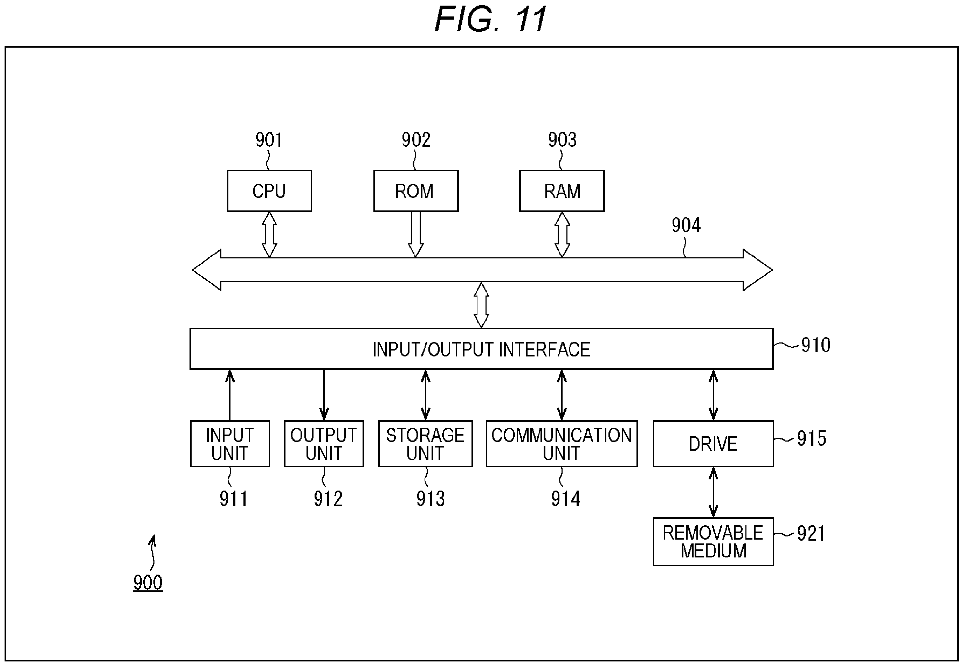

Fig. 11 is a block diagram illustrating a configuration example of hardware of a computer that executes the above-described series of processing with a program.

In a computer 900 illustrated in Fig. 11, a central processing unit (CPU) 901, a read only memory (ROM) 902, and a random access memory (RAM) 903 are mutually connected via a bus 904.

Furthermore, an input/output interface 910 is connected to the bus 904. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, or the like. The output unit 912 includes, for example, a display, a speaker, an output terminal, or the like. The storage unit 913 includes, for example, a hard disk, a RAM disk, a non-volatile memory, or the like. The communication unit 914 includes, for example, a network interface. The drive 915 drives a removable medium 921 such as a magnetic disk, an optical disk, a magneto-optical disk, or a semiconductor memory.

In a computer configured as above, the series of processing described above is performed by the CPU 901 loading, for example, a program stored in the storage unit 913 to the RAM 903 via the input/output interface 910 and the bus 904 and executing the program. As appropriate, the RAM 903 also stores data necessary for the CPU 901 to execute various kinds of processing.

A program executed by the computer can be applied by being recorded on the removable medium 921 as a package medium, or the like, for example. In this case, the program can be installed on the storage unit 913 via the input/output interface 910 by attaching the removable medium 921 to the drive 915.

Furthermore, the program can also be provided via a wired or wireless transmission medium such as a local area network, the Internet, or digital satellite broadcasting. In this case, the program can be received by the communication unit 914 and installed on the storage unit 913.

In addition, the program can be installed on the ROM 902 or the storage unit 913 in advance.

### <Object to which present technology is applied>

Although an encoding apparatus, a decoding apparatus, and the like have been described above as application examples of the present technology, the present technology can be applied to an arbitrary configuration.

For example, the present technology may be applied to various electronic devices such as a transmitter or receiver (for example, a television receiver or a mobile phone) for satellite broadcasting, wired broadcasting such as cable television, distribution on the Internet, or distribution to a terminal by cellular communication, an apparatus (for example, a hard disk recorder or a camera) that records an image on a medium such as an optical disk, a magnetic disk, or a flash memory, or regenerates an image from the storage medium, or the like.

Furthermore, for example, the present technology can also be implemented as a partial configuration of an apparatus, such as a processor (for example, a video processor) as a system large scale integration (LSI) or the like, a module (for example, a video module) using a plurality of processors or the like, a unit (for example, a video unit) using a plurality of modules or the like, or a set (for example, a video set) obtained by further adding another function to the unit.

Furthermore, for example, the present technology can also be applied to a network system including a plurality of apparatuses. For example, the present technology may be implemented as cloud computing in which the present technology is shared and processed jointly by a plurality of apparatuses via a network. For example, the present technology may be implemented in cloud service that provides a service related to an image (moving image) to an arbitrary terminal such as a computer, an audio visual (AV) apparatus, a portable information processing terminal, or Internet of Things (IoT) device.

Note that, in the present description, the system means a set of a plurality of components (apparatuses, modules (parts), or the like) without regard to whether or not all the components are in the same housing. Therefore, a plurality of apparatuses housed in separate housings and connected via a network, and one apparatus storing a plurality of modules in one housing are both systems.

### <Field/application to which present technology is applicable>

A system, apparatus, processing unit, or the like to which the present technology is applied may be utilized in an arbitrary field such as traffic, medical care, crime prevention, agriculture, stockbreeding, mining, beauty, factory, home appliance, weather, or nature monitoring, for example. Furthermore, application thereof is also arbitrary.

### <Others>

Furthermore, various kinds of information (metadata or the like) related to coded data (bit stream) may be transmitted or recorded in any form as long as the information is associated with the coded data. Here, the term "associate" means, for example, that, when one datum, is processed, another datum may be utilized (may be linked). That is, data associated with each other may be collected as one data or may be separate data. For example, information associated with coded data (image) may be transmitted on a transmission path different from a transmission line of the coded data (image). Furthermore, for example, information associated with coded data (image) may be recorded on a recording medium different from (or the same as) a recording medium of the coded data (image). Note that the "association" may be applied to a part of data instead of the entire data. For example, an image and information corresponding to the image may be associated with each other in arbitrary units such as in units of a plurality of frames, one frame, or a part in a frame.

Note that, in the present specification, terms such as "combine", "multiplex", "add", "integrate", "include", "store", "contain", "put in", or "insert" mean to collect a plurality of items into one, for example, to collect coded datum and meta datum into one datum, and mean one method for the above-described "association".

Furthermore, embodiments of the present technology are not limited to the above-described embodiments, and various changes can be made without departing from the scope of the present technology.

For example, a configuration described as one apparatus (or processing unit) may be divided and configured as a plurality of apparatuses (or processing units). To the contrary, the configurations described above as a plurality of apparatuses (or processing units) may be collectively configured as one apparatus (or processing unit). Furthermore, needless to say, a configuration other than the configurations described above may be added to a configuration of each apparatus (or each processing unit). Moreover, if a configuration and operation of an entire system are substantially the same, a part of a configuration of a certain apparatus (or processing unit) may be included in a configuration of another apparatus (or another processing unit).

Furthermore, for example, the above-described programs may be executed in an arbitrary apparatus. In that case, the apparatus is only required to have a necessary function (function block, or the like) so that necessary information can be acquired.

Furthermore, for example, each step in one flowchart may be executed by one apparatus, or may be executed by being shared by a plurality of apparatuses. Moreover, when a plurality of pieces of processing is included in one step, the plurality of pieces of processing may be executed by one apparatus, or may be executed by being shared by a plurality of apparatuses. In other words, a plurality of pieces of processing included in one step can be executed as processing of a plurality of steps. To the contrary, pieces of processing described as a plurality of steps can be collectively executed as one step.

Furthermore, for example, a program executed by the computer may be a program in which processing of steps describing the program is executed in time series in an order described in the present description, or a program in which the processing may be executed in parallel, or separately at a necessary timing such as when a call is made. That is, unless there is a contradiction, the processing of each step may be executed in an order different from the order described above. Moreover, the processing of steps describing the program may be executed in parallel with processing of another program, or may be executed in combination with processing of another program.

Furthermore, for example, a plurality of techniques related to the present technology can be implemented independently as a single piece unless there is a contradiction. Needless to say, a plurality of arbitrary pieces of the present technology can be used in combination. For example, a part or all of the present technology described in any of the embodiments can be implemented in combination with a part or all of the present technology described in another embodiment. Furthermore, any part or all of the present technology described above can be implemented in combination with another technology not described above.

Note that the present technology can have the following configurations.
(1) An image processing apparatus including
   an angle image generation unit that generates an angle image having, as a pixel value, information indicating an angular component of geometry data of a point cloud expressing a three-dimensional shaped object as a set of points, and
   an angle image encoding unit that encodes the angle image generated by the angle image generation unit.
(2) The image processing apparatus according to (1),
   in which each pixel of the angle image corresponds to each pixel of a depth image having a depth value as a pixel value, the depth value being a distance component of the geometry data.
(3) The image processing apparatus according to (1),
   in which the angle image includes an image having, as a pixel value, an absolute value of the angular component of the geometry data of each point.
(4) The image processing apparatus according to (1),
   in which the angle image includes an image having, as a pixel value, a prediction residual that is a difference from a prediction value of the angular component of the geometry data of each point.
(5) The image processing apparatus according to (4), the image processing apparatus further including
   a prediction information encoding unit that encodes information regarding prediction that derives the prediction value.
(6) The image processing apparatus according to (1), the image processing apparatus further including an angular component extraction unit that extracts the angular component from the geometry data,
   in which the angle image generation unit generates the angle image by using the angular component extracted by the angular component extraction unit.
(7) The image processing apparatus according to (1), the image processing apparatus further including
   a depth image encoding unit that encodes a depth image having, as a pixel value, a depth value that is a distance component of the geometry data,
   an attribute image encoding unit that encodes an attribute image having, as a pixel value, attribute data of the point cloud, and
   an occupancy-map encoding unit that encodes an occupancy map indicating a region in the depth image, the region including useful information.
(8) The image processing apparatus according to (7),
   in which the depth image includes a plurality of layers classified according to a magnitude of the depth value, and
   the depth image encoding unit encodes the depth image for each the layer.
(9) The image processing apparatus according to (8),
   in which the occupancy map is generated for each the layer of the depth image, and
   the occupancy-map encoding unit encodes the occupancy map for each the layer.
(10) An image processing method including
   generating an angle image having, as a pixel value, information indicating an angular component of geometry data of a point cloud expressing a three-dimensional shaped object as a set of points, and
   encoding the generated angle image.
(11) An image processing apparatus including
   an angle image decoding unit that decodes encoded data to generate an angle image having, as a pixel value, information indicating an angular component of geometry data of a point cloud expressing a three-dimensional shaped object as a set of points, and
   a construction unit that constructs the point cloud by using the angle image generated by the angle image decoding unit.
(12) The image processing apparatus according to (11),
   in which each pixel of the angle image corresponds to each pixel of a depth image having a depth value as a pixel value, the depth value being a distance component of the geometry data.
(13) The image processing apparatus according to (11),
   in which the angle image includes an image having, as a pixel value, an absolute value of the angular component of the geometry data of each point.
(14) The image processing apparatus according to (11),
   in which the angle image includes an image having, as a pixel value, a prediction residual that is a difference from a prediction value of the angular component of the geometry data of each point, and
   the construction unit derives the angular component of each point by using the prediction residual, and constructs the point cloud by using the derived angular component.
(15) The image processing apparatus according to (14), the image processing apparatus further including
   a prediction information decoding unit that decodes encoded data to generate information regarding prediction that derives the prediction value,
   in which the construction unit derives the angular component of each point by using the prediction residual and the information generated by the prediction information decoding unit.
(16) The image processing apparatus according to (11), the image processing apparatus further including
   a depth image decoding unit that decodes encoded data to generate a depth image having, as a pixel value, a depth value that is a distance component of the geometry data, and
   an attribute image decoding unit that decodes encoded data to generate an attribute image having, as a pixel value, attribute data of the point cloud,
   in which the construction unit
   generates the geometry data of the point cloud by using the depth image generated by the depth image decoding unit and the angle image generated by the angle image decoding unit, and
   constructs the point cloud by using the generated geometry data and the attribute data included in the attribute image generated by the attribute image decoding unit.
(17) The image processing apparatus according to (16), the image processing apparatus further including
   an occupancy-map decoding unit that decodes encoded data to generate an occupancy map indicating a region in the depth image, the region including useful information, and
   an extraction unit that extracts useful the information from the depth image and the angle image by using the occupancy map generated by the occupancy-map decoding unit,
   in which the construction unit generates the geometry data of the point cloud by using the information extracted by the extraction unit.
(18) The image processing apparatus according to (16),
   in which the depth image decoding unit generates the depth image for each layer classified according to a magnitude of the depth value, and
   the construction unit generates the geometry data of the point cloud by using the depth image including a plurality of the layers generated by the depth image decoding unit and the angle image generated by the angle image decoding unit.
(19) The image processing apparatus according to (18), the image processing apparatus further including
   an occupancy-map decoding unit that decodes encoded data to generate an occupancy map generated for each the layer of the depth image and indicating a region in the depth image, the region including useful information, and
   an extraction unit that extracts, by using the occupancy map for each the layer, useful the information from the depth image including a plurality of the layers and the angle image, the occupancy map being generated by the occupancy-map decoding unit,
   in which the construction unit generates the geometry data of the point cloud by using the information extracted by the extraction unit.
(20) An image processing method including
   decoding encoded data to generate an angle image having, as a pixel value, information indicating an angular component of geometry data of a point cloud expressing a three-dimensional shaped object as a set of point, and
   constructing the point cloud by using the generated angle image.

### REFERENCE SIGNS LIST

- 100: Encoding apparatus
- 111: Decomposition processing unit
- 112: Auxiliary patch information compression unit
- 113: Packing unit
- 114: Geometry video frame encoding unit
- 115: Attribute video frame encoding unit
- 116: Occupancy-map encoding unit
- 117: Angle video frame encoding unit
- 118: Multiplexer
- 200: Decoding apparatus
- 211: Demultiplexer
- 212: Auxiliary patch information decoding unit
- 213: Geometry video frame decoding unit
- 214: Attribute video frame decoding unit
- 215: Occupancy-map decoding unit
- 216: Angle video frame decoding unit
- 217: Unpacking unit
- 218: 3D reconstruction unit
- 900: Computer

## Claims

1. An image processing apparatus comprising:
an angle image generation unit that generates an angle image having, as a pixel value, information indicating an angular component of geometry data of a point cloud expressing a three-dimensional shaped object as a set of points; and
an angle image encoding unit that encodes the angle image generated by the angle image generation unit.

2. The image processing apparatus according to claim 1,
wherein each pixel of the angle image corresponds to each pixel of a depth image having a depth value as a pixel value, the depth value being a distance component of the geometry data.

3. The image processing apparatus according to claim 1,
wherein the angle image includes an image having, as a pixel value, an absolute value of the angular component of the geometry data of each point.

4. The image processing apparatus according to claim 1,
wherein the angle image includes an image having, as a pixel value, a prediction residual that is a difference from a prediction value of the angular component of the geometry data of each point.

5. The image processing apparatus according to claim 4, the image processing apparatus further comprising
a prediction information encoding unit that encodes information regarding prediction that derives the prediction value.

6. The image processing apparatus according to claim 1, the image processing apparatus further comprising an angular component extraction unit that extracts the angular component from the geometry data,
wherein the angle image generation unit generates the angle image by using the angular component extracted by the angular component extraction unit.

7. The image processing apparatus according to claim 1, the image processing apparatus further comprising:
a depth image encoding unit that encodes a depth image having, as a pixel value, a depth value that is a distance component of the geometry data;
an attribute image encoding unit that encodes an attribute image having, as a pixel value, attribute data of the point cloud; and
an occupancy-map encoding unit that encodes an occupancy map indicating a region in the depth image, the region including useful information.

8. The image processing apparatus according to claim 7,
wherein the depth image includes a plurality of layers classified according to a magnitude of the depth value, and
the depth image encoding unit encodes the depth image for each the layer.

9. The image processing apparatus according to claim 8,
wherein the occupancy map is generated for each the layer of the depth image, and
the occupancy-map encoding unit encodes the occupancy map for each the layer.

10. An image processing method comprising:
generating an angle image having, as a pixel value, information indicating an angular component of geometry data of a point cloud expressing a three-dimensional shaped object as a set of points; and
encoding the generated angle image.

11. An image processing apparatus comprising:
an angle image decoding unit that decodes encoded data to generate an angle image having, as a pixel value, information indicating an angular component of geometry data of a point cloud expressing a three-dimensional shaped object as a set of points; and
a construction unit that constructs the point cloud by using the angle image generated by the angle image decoding unit.

12. The image processing apparatus according to claim 11,
wherein each pixel of the angle image corresponds to each pixel of a depth image having a depth value as a pixel value, the depth value being a distance component of the geometry data.

13. The image processing apparatus according to claim 11,
wherein the angle image includes an image having, as a pixel value, an absolute value of the angular component of the geometry data of each point.

14. The image processing apparatus according to claim 11,
wherein the angle image includes an image having, as a pixel value, a prediction residual that is a difference from a prediction value of the angular component of the geometry data of each point, and
the construction unit derives the angular component of each point by using the prediction residual, and constructs the point cloud by using the derived angular component.

15. The image processing apparatus according to claim 14, the image processing apparatus further comprising
a prediction information decoding unit that decodes encoded data to generate information regarding prediction that derives the prediction value,
wherein the construction unit derives the angular component of each point by using the prediction residual and the information generated by the prediction information decoding unit.

16. The image processing apparatus according to claim 11, the image processing apparatus further comprising:
a depth image decoding unit that decodes encoded data to generate a depth image having, as a pixel value, a depth value that is a distance component of the geometry data; and
an attribute image decoding unit that decodes encoded data to generate an attribute image having, as a pixel value, attribute data of the point cloud,
wherein the construction unit
generates the geometry data of the point cloud by using the depth image generated by the depth image decoding unit and the angle image generated by the angle image decoding unit, and
constructs the point cloud by using the generated geometry data and the attribute data included in the attribute image generated by the attribute image decoding unit.

17. The image processing apparatus according to claim 16, the image processing apparatus further comprising:
an occupancy-map decoding unit that decodes encoded data to generate an occupancy map indicating a region in the depth image, the region including useful information; and
an extraction unit that extracts useful the information from the depth image and the angle image by using the occupancy map generated by the occupancy-map decoding unit,
wherein the construction unit generates the geometry data of the point cloud by using the information extracted by the extraction unit.

18. The image processing apparatus according to claim 16,
wherein the depth image decoding unit generates the depth image for each layer classified according to a magnitude of the depth value, and
the construction unit generates the geometry data of the point cloud by using the depth image including a plurality of the layers generated by the depth image decoding unit and the angle image generated by the angle image decoding unit.

19. The image processing apparatus according to claim 18, the image processing apparatus further comprising:
an occupancy-map decoding unit that decodes encoded data to generate an occupancy map generated for each the layer of the depth image and indicating a region in the depth image, the region including useful information; and
an extraction unit that extracts, by using the occupancy map for each the layer, useful the information from the depth image including a plurality of the layers and the angle image, the occupancy map being generated by the occupancy-map decoding unit,
wherein the construction unit generates the geometry data of the point cloud by using the information extracted by the extraction unit.

20. An image processing method comprising:
decoding encoded data to generate an angle image having, as a pixel value, information indicating an angular component of geometry data of a point cloud expressing a three-dimensional shaped object as a set of point; and
constructing the point cloud by using the generated angle image.
